# EUROPEAN PATENT APPLICATION

(11) **EP 3 185 561 A1**
(43) Date of publication of application: **28.06.2017**
(21) Application number: 16204910.0
(22) Date of filing: 19.12.2016
(51) Int. Cl.: H04N 19/463, H04N 19/467, H04N 19/98, H04N 19/39

(54) **METHODS AND DEVICES FOR ENCODING AND DECODING FRAMES WITH A HIGH DYNAMIC RANGE, AND CORRESPONDING SIGNAL AND COMPUTER PROGRAM**

(30) Priority: 23.12.2015 EP 15307119
(71) Applicant: THOMSON Licensing, 92130 Issy-les-Moulineaux (FR)
(72) Inventor: ANDRIVON, Pierre, 35576 Cesson-Sevigne (FR); ROBERT, Antoine, 35576 Cesson-Sevigne (FR); BORDES, Philippe, 35576 Cesson-Sevigne (FR)
(74) Representative: Labelle, Lilian

(57) **Abstract**

The disclosure relates to a method for encoding a sequence of frames with a first dynamic range, comprising:
- obtaining (11), for at least one frame with a first dynamic range of said sequence, at least one frame with a second dynamic range and at least one illumination map, said first dynamic range being higher than said second dynamic range,
- embedding (12) said at least one illumination map within said at least one frame with a second dynamic range, by:
- obtaining, for at least one block of said at least one frame with a second dynamic range, selection parameters for selecting at least one bit of at least one information element obtained from said at least one block,
- modifying at least one selected least significant bit, to carry data representing at least a part of said at least one illumination map.

## Description

### 1. Technical field

The present disclosure relates to the field of signal processing, and more specifically to the processing of images, also called frames.

More specifically, the present disclosure offers a technique for encoding at least one frame with a first dynamic range, from at least one frame with a second, lower, dynamic range. Such technique can be implemented in any video encoder or pre-processing module. For example, such frame with a first dynamic range is a HDR frame ("High Dynamic Range"), and such frame with a second dynamic range is a LDR frame ("Low Dynamic Frame") or SDR frame ("Standard Dynamic Frame").

The present disclosure also offers a corresponding decoding technique. Such technique can be implemented in any video decoder or a post-processing module.

In particular, such techniques can be implemented in a HDR video system comprising a codec with SDR backward compatibility.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The dynamic range is, by definition, the ratio between the largest and smallest possible value of the changeable quantity corresponding to the luminance, which is a photometric measure of the luminous intensity per unit area of light travelling in a given direction (luminance being expressed in *cd*/*m*²).

In order to encode HDR video, i.e. a sequence of frames with a high dynamic range, it has been proposed to decompose the HDR video in an LDR or SDR video and at least one illumination map, and to transmit in different streams the LDR/SDR video and the illumination map. Such technique is, for example, disclosed in PCT application WO2015097118, published on July 2nd, 2015. The LDR/SDR video can thus be encoded with a conventional standard codec, such as AVC/H.264, HEVC/H.265, etc.

Several techniques have been proposed to transmit the illumination map, also called backlight information or modulation values, in a conventional standard coded stream.

A first technique relies on frame packing. According to such technique, illumination map is placed outside the picture window before encoding.

A drawback of such technique is that one needs extra pixels to encode the illumination map, that may beget either level or conformance issues with the video encoding standard specification.

A second technique relies on transmitting the illumination map as auxiliary pictures.

A drawback of such technique is that it requires scalability extension of HEVC framework (SHVC) even if only a single layer is used. That may be an issue for legacy deployed devices or services that will/does not implement SHVC.

Theoretically, there is no synchronization issue as NALU from a same Access Units are synchronized by design. However, current SoC ("System on Chip") design may not have adapted interfaces to synchronize the auxiliary picture stream with the primary coded picture (for example SDR/LDR frame).

In addition, auxiliary pictures may be deployed in contribution networks but are not very used in distribution networks. Current Consumer Electronics SoC are not adapted to handle them.

A third technique relies on transmitting the illumination map as an SEI message ("Supplemental Enhancement Information").

According to such technique, synchronization of the SEI message with the associated encoded picture (for example coded SDR/LDR frame) may beget technical difficulties as, in SoC, SEI (metadata) and encoded picture are processed in two different non-synchronized data pathways.

In addition, SEI message may embed parameters representative of PSF ("Point Spread Function") model (such as shape functions) that needs an extra processing step for reconstructing the illumination map from the PSF model.

The present disclosure proposes a new solution to transmit the illumination map that overcomes at least one of the above-mentioned shortcomings.

### 3. Summary

The present disclosure relates to a method for encoding a sequence of frames with a first dynamic range, comprising:
- obtaining, for at least one frame with a first dynamic range of said sequence, at least one frame with a second dynamic range and at least one illumination map, said first dynamic range being higher than said second dynamic range,
- embedding said at least one illumination map within said at least one frame with a second dynamic range, by:
   - obtaining, for at least one block of said at least one frame with a second dynamic range, selection parameters for selecting at least one bit of at least one information element obtained from said at least one block, said selection parameters comprising a threshold (T), a minimum value (V) and a number of bits (B),
- selecting, from said selection parameters:
   - at least one of said information element having a rank equal to, or above, said threshold (T) and a value equal to, or above, said minimum value (V), to obtain at least one selected information element, and
   - at least one least significant bit of said at least one selected information element, to obtain at least one selected least significant bit, the number of selected least significant bit being inferior than, or equal to, said number of bits (B),
- modifying said at least one selected least significant bit, to carry data representing at least a part of said at least one illumination map.

The present disclosure thus proposes a new technique for encoding frames with a higher dynamic range (first dynamic range), from frames with a lower dynamic range (second dynamic range) and data representing the illumination map(s). Such illumination map can be obtained from a frame with a first dynamic range. It is also called modulation map or modulation image. It can comprise several values of illumination, or it can be reduced to a single value.

In particular, the present disclosure aims at hiding data representing the illumination map(s) into the second dynamic range frames, by using steganography techniques.

More specifically, the present disclosure aims at identifying, within the frames with a second dynamic range, which bits, or corresponding pixels, could be modified in order to carry data representing at least a part of the illumination map(s).

Such bits are selected thanks to a set of selection parameters, and are chosen such that once modified to carry data representing at least a part of the illumination map(s), they are not significantly visually changed (according to psycho-visual criterion like Watson distance for example).

The selection parameters comprise a threshold defining a rank, or position, above which at least one information element (like a coefficient, a transformed coefficient, an offset value...), is modifiable. Such rank value could be the position of a coefficient/transformed coefficient within a block/transformed block, or the index of an offset for example. The selection parameters also comprise a minimum value defining a value or magnitude above which at least one information element is modifiable, and a number of bits defining a number of least significant bits of the selected information element that are modifiable.

The selection parameters (threshold T, minimum value V and number of bits B) allow managing the trade-off between the capacity and the invisibility of the modifications.

In particular, said at least one information element belongs to the group comprising:
- transformed coefficients obtained from said at least one block, such as for example DCT coefficients, or DWT coefficients, before or after the classical quantization step of the encoder;
- filtering coefficients obtained from said at least one block, such as for example ALF coefficients ("Adaptive Loop Filtering");
- offset values obtained from said at least one block, like for example SAO offsets ("Sample Adaptive Offset").

According to a first example, the selection parameters are thus used to select at least one DCT coefficient and at least one LSB of the bits representing said DCT coefficient. According to this example, said selecting processes the DCT coefficients having a rank (i.e. a position or a frequency) higher than or equal to said threshold (T) in the scan order of the DCT coefficients (for example raster scan order, zig-zag scan order or z-scan order) and a value higher than or equal to said minimum value (V), and said modifying replaces at most the B selected least significant bits by said data representing said at least one illumination map.

According to a second example, the selection parameters are used to select at least one offset value and at least one LSB of the bits representing said offset value. According to this example, said selecting selects the offset values having a rank (i.e. an index) higher than or equal to said threshold (T) and a value higher than or equal to said minimum value (V), and said modifying replaces at most the B selected least significant bits by said data representing said at least one illumination map.

According to one aspect of the disclosure, the method comprising encoding said at least one frame with a second dynamic range.

The embedding of the illumination map(s) within said at least one frame with a second dynamic range can thus be implemented once a frame with a second dynamic range has been encoded, by modifying the selected least significant bit(s) of the selected information element(s) obtained from a block of the frame with a second dynamic range, or can be implemented during the encoding of the frame with a second dynamic range.

According to a specific aspect of the disclosure, the selection parameters, or information representing said selection parameters and enabling their reconstruction by a decoder, are transmitted to a decoder.

In this way, a decoder can identify on its side which bits have been modified, and can reconstruct the illumination map accordingly.

According to a specific embodiment, said selection parameters are determined by:
- determining initial selection parameters, and
- implementing at least one iteration of refinement of the initial selection parameters.

In this way, initial selection parameters can be determined and then refined, until a criterion of invisibility, for example, is reached.

In particular, said selection parameters or initial selection parameters are determined from a set of configuration frames and stored in at least one memory (for example, look-up tables). Obtaining selection parameters thus comprises reading said at least one memory (for example, look-up tables).

Such configuration frames can be used during a learning phase to determine the selection parameters. For example, some configuration frames relating to a sport game can be used to determine a set of selection parameters for the encoding of a sport sequence.

In variant, the values of the selection parameters can be hard coded once determined.

In particular, the selection parameters are determined from a statistical study of said sequence of frames or of said set of configuration frames, for example by using histogram analysis on transformed coefficients or on offset values, that can allow defining the threshold (T), the minimum value (V) and the number of bits (B) depending on the average luminance or luma.

Psycho-visual metrics, like the Watson distance for example, can be used to determine the selection parameters.

According to another embodiment, the disclosure relates to an encoder for encoding a sequence of frames with a first dynamic range, comprising at least one processor configured to:
- obtain, for at least one frame with a first dynamic range of said sequence, at least one frame with a second dynamic range and at least one illumination map, said first dynamic range being higher than said second dynamic range,
- embed said at least one illumination map within said at least one frame with a second dynamic range, by:
   - obtaining, for at least one block of said at least one frame with a second dynamic range, selection parameters for selecting at least one bit of at least one information element obtained from said at least one block, said selection parameters comprising a threshold (T), a minimum value (V) and a number of bits (B),
   - selecting, from said selection parameters:
      - at least one of said information element, to obtain at least one selected information element having a rank equal to, or above, said threshold (T) and a value equal to, or above, said minimum value (V), and
      - at least one least significant bit of said at least one selected information element, to obtain at least one selected least significant bit, the number of selected least significant bit being inferior than, or equal to, said number of bits (B),
   - modifying said at least one selected least significant bit, to carry data representing at least a part of said at least one illumination map.

Such a device can be especially adapted to implement the encoding method described here above. It could of course comprise the different characteristics pertaining to the encoding method according to an embodiment of the disclosure, which can be combined or taken separately. Thus, the characteristics and advantages of the device are the same as those of the encoding method and are not described in more ample detail.

Such device can be a pre-processing module of a conventional codec of the AVC/H.264, HEVC/H.265, etc, type.

The present disclosure also pertains to a method for decoding a signal representing a sequence of frames with a first dynamic range, said signal comprising at least one frame with a second dynamic range carrying data representing at least a part of at least one illumination map, said first dynamic range being higher than said second dynamic range. According to the disclosure, said method comprises:
- obtaining, for at least one block of said at least one frame with a second dynamic range, selection parameters for selecting at least one bit of at least one information element obtained from said at least one block, or information representing said selection parameters and enabling their reconstruction, said selection parameters comprising a threshold (T), a minimum value (V) and a number of bits (B),
- reconstructing said at least one illumination map from said selection parameters and said at least one frame with a second dynamic range, and
- reconstructing at least one frame with a first dynamic range by combining said at least one illumination map with said at least one frame with a second dynamic range.

The present disclosure thus proposes a new technique for decoding a signal representing a sequence of frames with a higher dynamic range (first dynamic range), from frames with a lower dynamic range (second dynamic range) and data representing the illumination map(s).

In particular, as the data representing the illumination map(s) are hidden within the frames with a second dynamic range, on selected bits (to fulfill a level of invisibility according to Watson distance for example), a legacy decoder/renderer (that cannot find back or retrieve hidden information) can decode and render the frames with a second dynamic range with some very light, even imperceptible, degradations, compared to frames with a second dynamic range that would have been classically encoded. The present disclosure thus offers a straightforward backward compatibility if the (encoded) frames with a second dynamic range, transmitted in the signal, are viewable.

A specific decoder can reconstruct the frames with a first dynamic range, by first reconstructing the illumination map(s) and then combining the illumination map(s) with the frames with a second dynamic range.

In particular, a decoder according to the present disclosure doesn't present any conformance issues, as both layers are embedded/merged in the same frame for example (as an SDR frame in the signal carry data representing an illumination map that can be used to reconstruct a corresponding HDR frame).

In addition, the present disclosure doesn't arise any synchronization problem, as both layers can be conveyed in the same frame for example. In other words, as an SDR frame in the signal carry data representing an illumination map, the SDR frame and the illumination map are synchronized, and can be easily used to reconstruct a corresponding HDR frame.

Such method is well suited for decoding a signal transmitted according to the encoding method. It could of course comprise the different characteristics pertaining to the encoding method according to an embodiment of the disclosure, which can be combined or taken separately.

According to a first example, obtaining selection parameters, or information representing said selection parameters, comprises reading values stored in at least one memory.

Such selection parameters can thus be stored in a memory, for example during a learning step or during encoding, and then be read by the decoder.

In variant, obtaining selection parameters, or information representing said selection parameters, comprises extracting values transmitted in said signal.

According to this variant, such selection parameters are transmitted in the signal, for example within a unit of the type SEI, SPS, PPS, VUI...

The selection parameters can also be fixed, or determined by an applicative specification, and thus known by the decoder.

In particular, reconstructing said at least one illumination map from said selection parameters and said at least one frame with a second dynamic range comprises:
- selecting, from said selection parameters:
   - at least one of said information element having a rank equal to, or above, said threshold (T) and a value equal to, or above, said minimum value (V), to obtain at least one selected information element, and
   - at least one least significant bit of said at least one selected information element, to obtain at least one selected least significant bit, the number of selected least significant bit being inferior than, or equal to, said number of bits (B),
- extracting the values carried by said at least one selected least significant bit to reconstruct said at least one illumination map.

The decoder thus performs a similar selection than the one implemented at encoding, in order to find the illumination map data hidden in the frame with a second dynamic range.

According to another embodiment, the disclosure relates to decoder for decoding a signal representing a sequence of frames with a first dynamic range, said signal comprising at least one frame with a second dynamic range carrying data representing at least a part of at least one illumination map, said first dynamic range being higher than said second dynamic range. According to the disclosure, said decoder comprises at least one processor configured to:
- obtain, for at least one block of said at least one frame with a second dynamic range, selection parameters for selecting at least one bit of at least one information element obtained from said at least one block, or information representing said selection parameters and enabling their reconstruction, said selection parameters comprising a threshold (T), a minimum value (V) and a number of bits (B),
- reconstruct said at least one illumination map from said selection parameters and said at least one frame with a second dynamic range, and
- reconstruct at least one frame with a first dynamic range by combining said at least one illumination map with said at least one frame with a second dynamic range.

Such a device can be especially adapted to implement the decoding method described here above. It could of course comprise the different characteristics pertaining to the decoding method according to an embodiment of the disclosure, which can be combined or taken separately. Thus, the characteristics and advantages of the device are the same as those of the decoding method and are not described in more ample detail.

Such device can be a post-processing module of a conventional codec of the AVC/H.264, HEVC/H.265 etc type.

The disclosure also concerns a signal representing a sequence of frames with a first dynamic range, comprising at least one frame with a second dynamic range carrying data representing at least a part of at least one illumination map, said first dynamic range being higher than said second dynamic range, wherein said signal carries, for at least one block of said at least one frame with a second dynamic range, selection parameters for selecting at least one bit of at least one information element obtained from at least one block, or information representing said selection parameters and enabling their reconstruction, said selection parameters comprising a threshold (T), a minimum value (V) and a number of bits (B).

Such signal can be decoded using legacy codecs (for example H.264/AVC) or recent existing codecs (for example HEVC) to decode the frames with a second dynamic range. It can also be decoded using decoder according to the disclosure, to reconstruct the frames with a first dynamic range.

As already mentioned, such selection parameters can be transmitted in the signal, for example within a unit of the type SEI, SPS, PPS, VUI...

They can be used by a decoder to reconstruct the illumination map(s), and then the frames with a first dynamic range from the illumination map(s) and the frames with a second dynamic range.

Such signal can also carry at least one indicator signaling that illumination map data are embedded on the frames with a second dynamic range, or signaling the type of information elements that have been modified (transformed coefficients, filtering coefficients, offset values...).

Another aspect of the disclosure pertains to a computer program product downloadable from a communication network and/or recorded on a medium readable by computer and/or executable by a processor comprising software code adapted to perform an encoding method and/or a decoding method, wherein the software code is adapted to perform the steps of at least one of the methods described above.

In addition, the present disclosure concerns a non-transitory computer readable medium comprising a computer program product recorded thereon and capable of being run by a processor, including program code instructions for implementing the steps of at least one of the methods previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief description of the drawings

The disclosure will be better understood and illustrated by means of the following embodiment and execution examples, in no way limitative, with reference to the appended figures on which:
- Figure 1 is a flow chart illustrating the main steps of a method for encoding a sequence of frames with a first dynamic range according to an embodiment of the disclosure;
- Figure 2 depicts an example algorithm for the determination of the selection parameters T, V, B according to an embodiment of the disclosure;
- Figures 3 and 4 illustrates respectively an example of histogram of DCT coefficients per rank or per level, used to determine the selection parameters according to the algorithm of Figure 2;
- Figure 5 illustrates an example of reverse cumulative histogram of the level of DCT coefficients of rank T per frame;
- Figure 6 shows an example of SAO offset values;
- Figure 7 presents the main steps of a method for decoding a signal representing a sequence of frames with a first dynamic range according to an embodiment of the disclosure;
- Figures 8 and 9 are block diagrams of devices implementing respectively the encoding method according to Figure 1 and the decoding method according to Figure 7.

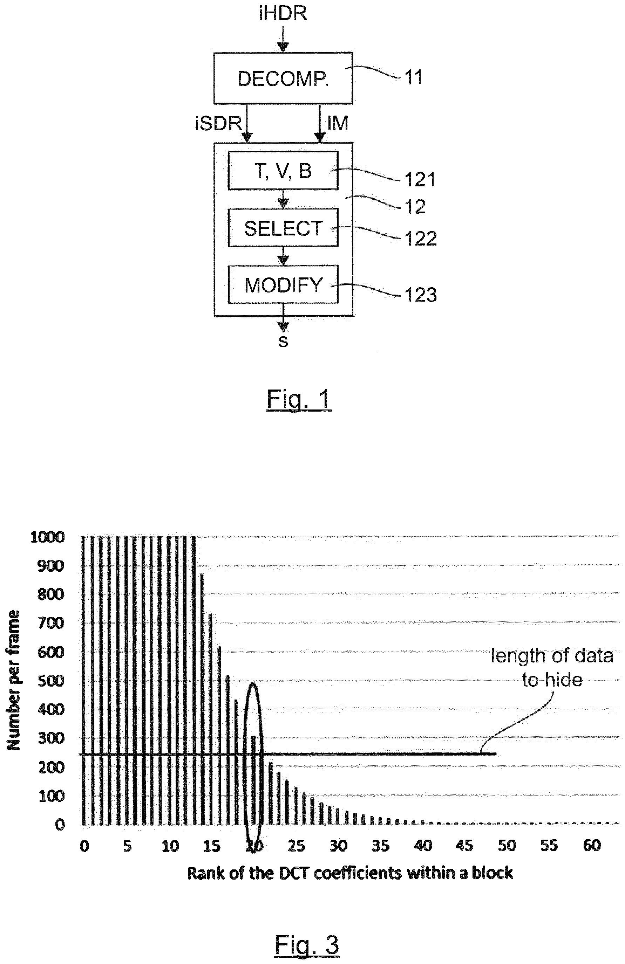

In Figures 1, 2 and 7 to 9, the represented blocks are purely functional entities, which do not necessarily correspond to physically separate entities. Namely, they could be developed in the form of software, hardware, or be implemented in one or several integrated circuits, comprising one or more processors.

### 5. Description of embodiments

It is to be understood that the figures and descriptions of the present disclosure have been simplified to illustrate elements that are relevant for a clear understanding of the present disclosure, while eliminating, for purposes of clarity, many other elements found in typical encoding and/or decoding devices.

The general principle of the disclosure relates to the decomposition of frames with a first dynamic range into frames with a second, lower, dynamic range, and illumination map(s). Steganography is then used in order to embed the illumination map data, which have very low entropy, within at least one frame with a second dynamic range. The present disclosure offers a technique for hiding the illumination map data within frames with a second dynamic range, by selecting some bits, obtained from the frames with a second dynamic range, that can be modified.

Such bits are selected thanks to selection parameters allowing management of the trade-off between capacity and invisibility of the modifications. In other words, such bits are chosen such that once modified to carry data representing at least a part of the illumination map(s), they are not significantly visually changed (according to psycho-visual criterion like Watson distance for example).

In the following, frames with a first dynamic range are considered to be HDR frames, and frames with a second dynamic range are considered to be SDR frames. Generally speaking, frames with a first dynamic range should have a dynamic range higher than frames with a second dynamic range. Here below, the term "block" can refer to a block according to AVC/SVC, or a CTB ("Coding Tree Block") according to HEVC.

### 5.1 Encoding side

### A) Main features of the encoding method

The main steps of the method for encoding at least one frame with a first dynamic range, from at least one frame with a second dynamic range, are illustrated in Figure 1.

In a first step 11, a HDR frame, iHDR, is decomposed into a SDR frame, iSDR, and an illumination map, IM, using a known technique.

In a second step 12, the illumination map IM is embedded within said iSDR frame.

In order to hide the illumination map IM within the iSDR frame, the encoding method according to the disclosure aims at determining bits obtained from the iSDR frame that can be modified.

To do so, the embedding step comprises a first sub-step 121 for obtaining, for at least one block of the iSDR frame, selection parameters for selecting some bits of information element(s) obtained from said block(s), like transformed coefficients, offset values, etc. The selection parameters comprise a threshold T, a minimum value V and a number of bits B.

Such selection parameters can be determined from the input sequence of HDR frames (or corresponding SDR frames), or from a set of configuration frames, as will be explained below.

In a second sub-step 122, the selection parameters T, V and B are used to select at least one of said information element, having a rank equal to or above the threshold T and a value equal to or above the minimum value V, to obtain at least one selected information element. They are also used to select at least one least significant bit of the selected information element(s), to obtain at least one selected least significant bit, where the number of selected least significant bit being inferior than, or equal to, said number of bits B.

In a third sub-step 123, the selected least significant bit(s) are modified, in order to carry data representing the illumination map IM. The number of selected least significant bit(s) that are modified is B', with *B'* ≤ *B.*

A signal s is generated from the above process. It carries the iSDR frame, which comprise modified bits in order to carry data representing the illumination map IM. Such signal can carry the selection parameters used to modify the selected least significant bit(s) of the information element(s) obtained from at least one block of the iSDR frame.

The above process is implemented for at least one HDR frame. It could be implemented for all the HDR frames of the sequence (video). However, it should be noted that only one illumination map could be obtain for the whole sequence of HDR frames, or for a GOP of HDR frames. In this case, data representing the illumination map can be distributed on the whole sequence of corresponding SDR frames, or on the GOP of corresponding SDR/LDR frames. Data representing the illumination map(s) may be a single value or shape functions (Point Spread Functions).

In a similar manner, the selection parameters can be determined for different coding units, such as a block, a group of blocks, a frame, a GOP, the whole sequence, etc. According to at least one embodiment, the selection parameters can thus be transmitted only once for the whole sequence of HDR frames, or for a GOP.

The embedding of the illumination map within SDR frame(s) can be implemented during or after the encoding of the SDR frame(s). The information elements according to the disclosure can thus be obtained from a block of an SDR frame at different stage of the encoding process. For example, a selected information element is a transformed coefficient obtained from a block of the SDR frame (DCT coefficient, DWT coefficient), or an offset value (of SAO encoding in-loop tool) obtained from the block of the SDR frame. A conventional standard encoder can encode the modified SDR frame(s) (i.e. SDR frames embedding data representing illumination map(s)).

Let's now describe two embodiments for embedding the illumination map(s) within SDR frame(s).

According to a first embodiment, data representing the illumination map(s) are conveyed using quantized DCT coefficients, modified during the encoding of the SDR frames.

A set of selection parameters is obtained, comprising a threshold T (frequency or position for DCT), a minimum value V (magnitude of the DCT coefficient) and a number of bits B. For each DCT block of a SDR frame, if some quantized DCT coefficients of a higher or equal frequency, i.e. of a higher or equal rank in the block, than the threshold T are larger than or equal to the magnitude value V, then they are selected as "selected information elements" to carry some information.

In such selected DCT coefficients able to hide some information, at most B bits of data representing the illumination map(s), for example PSF, are embedded as the LSBs (Least Significant Bits).

According to a second embodiment, according to HEVC/H.265 for example, data representing the illumination map(s) are conveyed using SAO edge or band offsets, if present.

Once again, a set of selection parameters is obtained, comprising a threshold T (SAO edge offset or band offset position, or index), a minimum value V and a number of bits B. In the same way as for quantized DCT coefficients, if some SAO offsets have an index higher than or equal to the threshold T and a value larger than or equal to the minimum value V, then at most their B LSBs are used to carry data representing at least a part of the illumination map(s).

According to other embodiments, data representing the illumination map(s) can be conveyed using other information element obtained from the SDR frames, like filtering coefficients (for example ALF coefficients).

### B) Determination of the selection parameters

As stated above, the selection parameters can be determined from the input sequence of HDR frames or corresponding SDR frames, or from a set of configuration frames. Such selection parameters can be determined for at least one block, for at least one frame, or for the whole sequence.

According to a first example, the threshold T, minimum value V, and number of bits B can be determined from a statistical study of a set of configuration frames, preferably HDR, during a learning step. For example, one can use histogram analysis on DCT coefficients ranks and levels or SAO offsets ranks and magnitude. Such study can allow defining values T, V and B depending for example on the average luminance or luma of the configuration frames. The values can be stored in one or more memories, for example look-up table(s). An encoder can compute the average luminance or luma of an HDR frame or corresponding SDR frame, and read the corresponding values to be used as selection parameters in the look-up table(s).

Such values of the selection parameters can be transmitted to a decoder within the signal, or a decoder can compute the average luminance or luma of a received SDR frame and read the corresponding selection parameters in the look-up table.

According to a second example, the threshold T, minimum value V, and number of bits B can be determined from a statistical study of a set of configuration frames, during a learning step, and used as reference values, stored in a memory of the encoder ("hard coded").

According to this second example, explicit signaling of the selection parameters T, V, and B is not required. However specification should refer to these determined values. Alternatively, such values of the selection parameters can be transmitted to a decoder within the signal, or stored within a memory of the decoder.

According to a third example, the threshold T, minimum value V, and number of bits B can be determined from the input sequence of HDR frames, or corresponding SDR frames. For example, a set of initial selection parameters is firstly determined, and then at least one iteration of refinement of the initial selection parameters is implemented. The initial selection parameters can be determined from a first global statistical study of the sequence (at the pixel level as luminance values, variability ..., or with some partial encoding...).

For example, first initial values ofT, V and B for a frame (or average T, V and B for a GOP or the whole sequence) can be defined, by taking into account:
- the statistical study, as the number and the position within blocks of transformed coefficients, filtering coefficients, or offset values for example,
- the reachable invisibility, through luminance analysis (e.g. a MSE-based distance subject to a threshold) and
- the PSF information, as the needed capacity to hide the illumination map data.

Then, for each frame (or GOP or sequence) where illumination map(s) could be inserted according to the initial selection parameters, a second analysis of the frame (or GOP) or sequence can be performed to refine the selection parameters values at the block or group of blocks level. This second study can be based on PSNR measurement, on some psycho-visual model or any combination of such models to ensure the invisibility and the capacity (e.g. Watson distance). An example algorithm is presented below.

For example, data representing the illumination map(s), such as PSF, are hidden into the SDR frames by using the initial selection parameters. Then, an objective quality metrics such as classical PSNR measurement (or any other standard measurement, as SSIM, Watson distance...) allow validating or not these values. If the PSNR is too much impacted (i.e. inferior to a certain threshold), then these initial values are modified: T is increased, V is decreased as well as B. Advantageously, this second step of refinement can be repeated until invisibility and capacity criteria have been reached.

When considering PSF representation of the illumination map, the modified values of the SDR frames may be spatially collocated with the position of the PSF coefficients representative of the illumination map (at the coded block, CTB/CTU Coding Tree Block, coding Units CU, prediction units PU, transform units TU level).

### C) Description of a first embodiment: embedding illumination map data on transformed coefficients

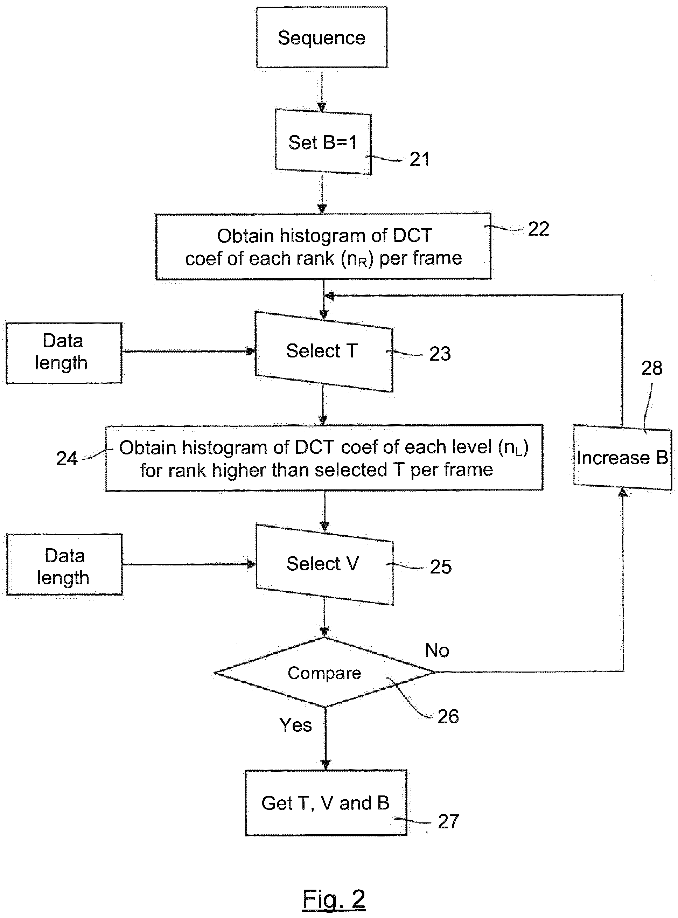

With reference to Figures 2 to 5, we present an embodiment of the disclosure, for embedding illumination map data on transformed coefficients, like DCT coefficients for example.

**Figure 2** illustrates the determination of the selection parameters T, V, B from the input sequence of HDR frames, or corresponding SDR frames.

At step 21, the number of bits B is first set to the initial value 1.

At step 22, at least one histogram representing the number of DCT coefficients of each rank (position in zig-zag scan, z-scan or raster scan order) per frame is obtained from a statistical study of the input sequence. From a given sequence, through a partial decoding or encoding, it is indeed possible to retrieve histograms of the DCT coefficients: their rank in the block, their level/magnitude for each rank.

For instance, **Figure 3** illustrates a histogram of DCT coefficients per rank, with in abscissa the rank (n_{R}) of the DCT coefficients within a block, and in ordinate the number of DCT coefficients of this rank per frame (occurrence).

At step 23, the threshold T is set to the value of the rank (n_{R}) of DCT coefficients which occurrence in a frame is higher than or equal to the length (in bits) of the illumination map data to hide. In particular, if the length of the data to hide is equal to L, the threshold T can be set to the value of the rank of DCT coefficients which occurrence in a frame is greater than or equal to the integer part of *αL,* with *α* a real number such as *α* > 1.

If we consider for example that the data to hide have a length of 230 bits, then, in view of **Figure 3****,** the threshold is set to the value of the last rank of DCT coefficients which occurrence is larger than 230 bits, that is T=20.

The histogram of DCT coefficients per rank in a frame thus allows defining a first value for the threshold T, knowing the size of the data to hide.

At step 24, at least one histogram representing the DCT coefficients level (n_{L}) with rank higher than or equal to the threshold T is obtained for a frame.

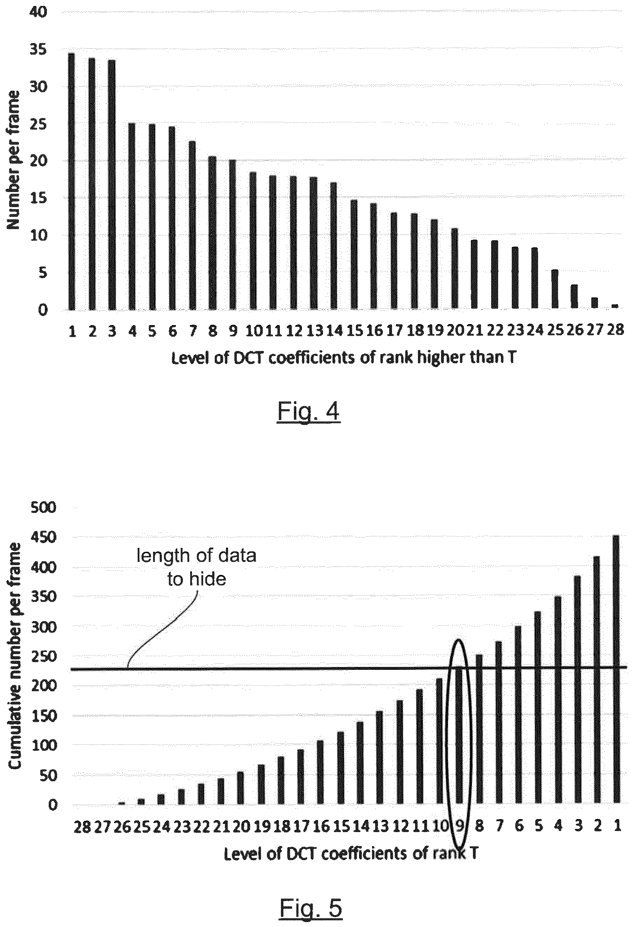

For instance, **Figure 4** illustrates a histogram of DCT coefficients levels (n_{L}), with in abscissa the level of the DCT coefficients for a rank higher than or equal to the threshold T (for example, rank value 20), and in ordinate the number of DCT coefficients with this level per frame.

At step 25, the minimum value V is set to the value of the DCT coefficient level from which there are a number of DCT coefficients at least higher than or equal to the length of the illumination map data to hide.

From the rank higher than or equal to the threshold T (for example, rank value 20), the histogram per frame of the level of the DCT coefficients is used to select the minimum value V. For example, by calculating the reverse cumulative sum of such a histogram, as illustrated in **Figure 5****,** the minimum value V appears as the largest level where reverse cumulative number of DCT coefficients is higher than or equal to the length of the data to hide. If we consider for example that the data to hide have a length of 230 bits, then, in view of **Figure 5****,** the minimum value is set to the value of the largest level n_{L} where reverse cumulative number of DCT coefficients is higher than 230 bits, that is V=9.

At step 26, comparisons can be performed to validate the values of the selection parameters T, V and B, to ensure a certain level of invisibility of the hidden data.

For example, the selected values T and V can be compared to predefined minimum threshold and minimum value, Tₘᵢₙ and Vₘᵢₙ, obtained from a set of configuration frames, or from average histograms obtained from the sequence.

Some psycho-visual metrics can also be calculated between original DCT blocks and modified ones, as the Watson distance between original DCT blocks and their associated modified DCT blocks, or SSIM between reconstructed blocks.

If step 26 validates that the selection parameters T, V and B ensure a certain level of invisibility of the hidden data, for example if the Watson distance complies with a predetermined criterion of invisibility, then the set of selection parameters is determined (27) and can be used for embedding data representing illumination map(s) on the SDR frame(s).

If the selection parameters T, V and B do not ensure a certain level of invisibility of the hidden data, for example if the Watson distance doesn't comply with a predetermined criterion of invisibility, then the value of B is increased, and the algorithm go back to step 23 for determining the threshold T. Increasing the value of B enables increasing the values of T and V, so that visibility will be likely more preserved.

The algorithm described above in view of Figures 2 to 5 may thus be performed iteratively.

In case the selection parameters enable to select more bits that can be modified (capability bits) than the actual number of bits of the illumination map data to hide, then a termination criterion can be:
- the length of the illumination map data to hide that is for instance sent along the coded video signal (SPS, PPS,...) or
- a termination character to indicate that all the hidden bits to be recovered have been processed so far.

In case the selection parameters enable to select, in one information element (i.e. one DCT coefficient), less bits that can be modified than the actual number of bits of the illumination map data to hide, the illumination map data can be distributed in several information elements.

The algorithm described above in view of Figures 2 to 5 may also be performed at different sequence or frame levels, for example:
1. at the sequence level and at the frame level:
   - firstly at the sequence level, by using average over frame histograms that allows defining global initial T, V and B values for the sequence, by using the data to hide average payload length. In this case, the step 26 can compare the initial T and V values to minimum values Tₘᵢₙ and Vₘᵢₙ,
   - then at the frame level, to refine theses initial values and ensure the capacity and invisibility. In this case, the capacity is checked by using the current actual hidden data size and the invisibility by performing a psycho-visual comparison, for instance the Watson distances, between original DCT blocks and their associated modified DCT blocks.
   For this use case, initial selection parameters values T, V and B are provided once for the sequence, then only delta values (as the difference between refined and initial values) can be transmitted for each frame, if needed (else assumed to be null delta).
2. at the frame level only, in order to define values T, V and B for each frame independently.
   For this use case, precise selection parameters values T, V and B are transmitted for each frame independently (or delta with previous one). Side data are much larger in this case, thus this use case is suited for quite large amount of data to hide.

Once the selection parameters are determined, they can be used to select the LSB of the DCT coefficients that can be replaced by illumination map data.

### D) Description of a second embodiment: embedding illumination map data on offset values

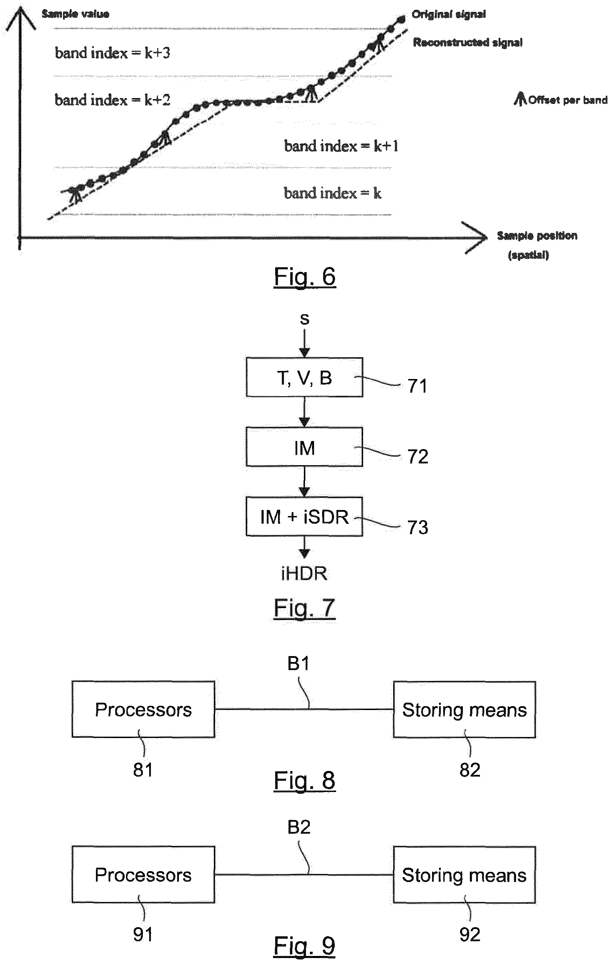

With reference to **Figure 6****,** we now present an embodiment of the disclosure, for embedding illumination map data on offsets values, like for example SAO offsets. Such embodiment can be implemented when considering HEVC or other further codec using SAO tool.

An algorithm similar to the one illustrated in Figure 2 can be used, with offset values instead of DCT coefficients. Similarly, selection parameters can be determined to select the SAO offset value(s), and the LSB of the selected SAO offset value(s) that can be used to hide illumination map data.

According to this embodiment, the threshold T may determine which of band/edge offsets can be modified, among the four offsets possible per block (CTB). T may be fixed to a default value or predetermined for SAO case. V is the minimum offset value to be considered for data hiding, B is still the number of LSB bits that can be modified.

Figure 6 illustrates the sample values of an original signal (i.e. signal before encoding process), and of a reconstructed signal (i.e. signal resulting after encoding and decoding processes), as a function of the sample position, and an example of SAO band offset values. More specifically, four bands are defined, each associated with a band index: band index k, band index k+1, band index k+2 and band index k+3. For each band, an offset value between the reconstructed signal and the original signal is defined.

According to this embodiment, at least one of the offset values can be modified to carry illumination map data. Such offset value(s) is/are selected from the selection parameters T, V and B, by selecting the offset values with an index higher than or equal to the threshold T and a value higher than or equal to said minimum value V. Then, at most the B least significant bits of the selected offset values are replaced by data representing said at least one illumination map.

For example, if k=0 and T=2, only the last offset value in the band index 2 is selected.

### 5.2 Signal

As already mentioned, the selection parameters (threshold T, minimum value V, and number of bits B) can be stored in at least one memory of the encoder and/or the decoder, or in at least one look-up table. In variant, the selection parameters, or information representing the selection parameters and enabling their reconstruction, can be inserted in the signal transmitted from the encoder to the decoder, with the modified (encoded) SDR frames.

For example, the selection parameters, or information representing the selection parameters and enabling their reconstruction, can be transmitted in a unit of the type SEI, SPS, PPS, VUI...

In addition as the selection parameters can be determined for at least one block, for at least one frame, or for the whole sequence, they can be transmitted at a block level, at a frame level, at a GOP level, or at the sequence level.

The signal can also carry at least one indicator informing the decoder whether illumination map data are embedded within the SDR frames, and/or the type of information elements used to carry illumination map data (transformed coefficients, filtering coefficients, offset values...).

If the number of selected least significant bits, B', is inferior to the number of bits B, the value of the number of bits, B, can be replaced by the value of the number of selected least significant bits, B', in the memories/look-up tables or in the transmitted signal.

Table 1 here below gives an example of signaling the transmission of illumination information within the SDR frames, enabling a decoder to retrieve hidden data from an AVC or HEVC bit-stream, for an SEI implementation.

**Table 1**

| illumination_information(payloadSize){ | **Descriptor** |
|---|---|
| **illum_threshold** | ue(v) |
| **illum_value** | ue(v) |
| **illum_bits** | ue(v) |
| } | |

Persistence aspect may also appear in the SEI in order to convey information on the persistence of such values in presentation order.

A size representative of the data length or maximum data length to hide/hidden in the signal (bitstream) may also be carried in the signal or hard coded in a specification.

SPS, PPS, VUI versions may also be derived from Table 1.

### 5.3 Decoding side

At the decoding side, a legacy SDR decoder/renderer can decode and render the SDR frames with some imperceptible degradations compared to the original SDR frames that would have been classically encoded.

A decoder which knows that information elements have been modified to carry illumination map data firstly obtains the selection parameters T, V and B. The decoder can be informed that information elements have been modified to carry illumination map data through SEI, SPS, PPS, or VUI. This information can also be hard coded at the decoder side. During the decoding of the signal carrying SDR (encoded) frames, some data are extracted to reconstruct the hidden illumination map(s) data. The illumination map(s) are reconstructed, for example from the decoded PSF, and produces the sequence of HDR frames when combined with the decoded slightly degraded SDR frames.

The main steps of the method for decoding a signal representing a sequence of frames with a first dynamic range (HDR) are illustrated in **Figure 7****.** Such signal comprises at least one frame with a second dynamic range (SDR) carrying data representing at least a part of at least one illumination map, and possibly selection parameters, or information representing said selection parameters and enabling their reconstruction.

In a first step 71, selection parameters, or information representing said selection parameters, are obtained.

The selection parameters comprise a threshold T, a minimum value V and a number of bits B, at the sequence level, at a GOP level, at a frame level, or at a block level. As stated above, the number of bits B can be replaced by the number of bits B', corresponding to the number of bits used to carry illumination map data (selected LSBs).

The values of the selection parameters can be obtained by reading values stored in at least one memory, or by extracting values transmitted in the signal. The selection parameters can also be determined at the decoding side, by adapting the algorithm described in Figures 2 to 5 for example, and by replacing the wording "data to hide" by "hidden data" in the corresponding description.

These values of the selection parameters can also be a composition of initial selection parameters values and refinements (for example, some global values at the sequence level with some deltas for refinement at the frame level).

In a second step 72, the selection parameters are used to select some bits of information element(s) obtained from at least one block of at least one iSDR (encoded) frame, that carry illumination map data. More specifically, such selection parameters are used to select information element(s) having a rank equal to, or above, the threshold T and a value equal to, or above, the minimum value V, to obtain at least one selected information element. They are also used to select at least one least significant bit of the selected information element(s), to obtain at least one selected least significant bit, the number of selected least significant bit being inferior than the number of bits B, or equal to the number of bits B' corresponding to the number of bits used to carry illumination map data.

Such selected least significant bits, selecting by the decoder, are the bits carrying illumination map data. The illumination map(s) IM can thus be reconstructed from the information carried by the selected significant bits.

In a third step 73, at least one iHDR frame can be reconstructed by combining at least one of the illumination map(s) IM with said at least one iSDR frame.

As for the encoding, several embodiments can be implemented, depending on which information elements have been modified to carry the illumination map data. The process implemented at the decoding side to select the bits that carry illumination map data is very similar to the one implemented at the encoding side. It is thus not explained in detail.

According to a first embodiment, data representing the illumination map(s) are conveyed using quantized DCT coefficients, modified during the encoding of the SDR frames.

The decoder, which knows that quantized DCT coefficients have been modified to carry illumination map data and which has obtained selection parameters T, V, and B (or B'), can extract the illumination map data as the B (or B') LSBs of quantized DCT coefficients of a higher or equal frequency than the threshold T and larger than or equal to the minimum value V.

According to a second embodiment, according to HEVC/H.265 for example, data representing the illumination map(s) are conveyed using SAO edge or band offsets, if present.

The decoder, which knows that offset values have been modified to carry illumination map data and which has obtained selection parameters T, V, and B (or B'), can extract the illumination map data as the B (or B') LSBs of offset values having an index of higher rank than, or equal to, the threshold T and a value larger than, or equal to, the minimum value V.

According to other embodiments, data representing the illumination map(s) can be conveyed using other information element obtained from the SDR frames, like filtering coefficients (for example ALF coefficients).

### 5.4 Devices

Figure 8 illustrates an example of an encoder for encoding a sequence of frames with a first dynamic range according to an embodiment of the disclosure. Only the essential elements of the encoding device are shown.

Such an encoding device comprises at least:
- at least one processor 81 for executing the applications and programs stored in a non-volatile memory of the device and especially configured to:
   ∘ obtain, for at least one frame with a first dynamic range of said sequence, at least one frame with a second dynamic range and at least one illumination map, said first dynamic range being higher than said second dynamic range,
   o embed said at least one illumination map within said at least one frame with a second dynamic range, as described above;
- storing means 82, such as a volatile memory;
- an internal bus B1 to connect the various modules and all means well known to the skilled in the art for performing the encoding device functionalities.

Figure 9 illustrates an example of a device for decoding a signal representing a sequence of frames with a first dynamic range, said signal comprising at least one frame with a second dynamic range carrying data representing at least a part of at least one illumination map, according to an embodiment of the disclosure. Only the essential elements of the decoding device are shown.

Such a decoding device comprises at least:
- at least one processor 91 for executing the applications and programs stored in a non-volatile memory of the device and especially configured to:
   ∘ obtain selection parameters or information representing said selection parameters and enabling their reconstruction,
   o reconstruct at least one illumination map from said selection parameters and said at least one frame with a second dynamic range, and
   o reconstruct at least one frame with a first dynamic range by combining said at least one illumination map with said at least one frame with a second dynamic range.
- storing means 92, such as a volatile memory;
- an internal bus B2 to connect the various modules and all means well known to the skilled in the art for performing the decoding device functionalities.

Such encoding device and/or decoding device could each be implemented according to a purely software realization, purely hardware realization (for example in the form of a dedicated component, like in an ASIC, FPGA, VLSI, ...), or of several electronics components integrated into a device or in a form of a mix of hardware elements and software elements. It could also be implemented in the form of a system.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. **A method for encoding** a sequence of frames with a first dynamic range, comprising:
- obtaining (11), for at least one frame with a first dynamic range of said sequence, at least one frame with a second dynamic range and at least one illumination map, said first dynamic range being higher than said second dynamic range,
- embedding (12) said at least one illumination map within said at least one frame with a second dynamic range, by:
- obtaining (121), for at least one block of said at least one frame with a second dynamic range, selection parameters for selecting at least one bit of at least one information element obtained from said at least one block, said selection parameters comprising a threshold (T), a minimum value (V) and a number of bits (B),
- selecting (122), from said selection parameters:
- at least one of said information element having a rank equal to, or above, said threshold (T) and a value equal to, or above, said minimum value (V), to obtain at least one selected information element, and
- at least one least significant bit of said at least one selected information element, to obtain at least one selected least significant bit, the number of selected least significant bit being inferior than, or equal to, said number of bits (B),
- modifying (123) said at least one selected least significant bit, to carry data representing at least a part of said at least one illumination map.

2. The method according to claim 1, wherein said at least one information element belongs to the group comprising:
- transformed coefficients obtained from said at least one block,
- filtering coefficients obtained from said at least one block,
- offset values obtained from said at least one block.

3. The method according to any one of claims 1 and 2, comprising encoding said at least one frame with a second dynamic range.

4. The method according to any one of claims 1 to 3, comprising transmitting said selection parameters, or transmitting information representing said selection parameters and enabling their reconstruction by a decoder.

5. The method according to any one of claims 1 to 4, wherein said information element is a DCT coefficient, and wherein said selecting selects the DCT coefficients having a rank higher than or equal to said threshold (T) and a value higher than or equal to said minimum value (V), and wherein said modifying replaces the selected least significant bits by said data representing said at least one illumination map.

6. The method according to any one of claims 1 to 4, wherein said information element is an offset value, and wherein said selecting selects the offset values with an index higher than or equal to said threshold (T) and a value higher than or equal to said minimum value (V), and wherein said modifying replaces the selected least significant bits by said data representing said at least one illumination map.

7. The method according to any one of claims 1 to 6, wherein said selection parameters are determined by:
- determining initial selection parameters, and
- implementing at least one iteration of refinement of the initial selection parameters.

8. The method according to any one of claims 1 to 7, wherein said selection parameters or initial selection parameters are determined from a set of configuration frames and stored in at least one memory, and wherein obtaining selection parameters comprises reading said at least one memory.

9. The method according to any one of claims 1 to 8, wherein said selection parameters are determined from a statistical study of said sequence of frames or of said set of configuration frames.

10. **A method for decoding** a signal representing a sequence of frames with a first dynamic range, said signal comprising at least one frame with a second dynamic range carrying data representing at least a part of at least one illumination map, said first dynamic range being higher than said second dynamic range,
said method comprising:
- obtaining (71), for at least one block of said at least one frame with a second dynamic range, selection parameters for selecting at least one bit of at least one information element obtained from said at least one block, or information representing said selection parameters and enabling their reconstruction, said selection parameters comprising a threshold (T), a minimum value (V) and a number of bits (B),
- reconstructing (72) said at least one illumination map from said selection parameters and said at least one frame with a second dynamic range, and
- reconstructing (73) at least one frame with a first dynamic range by combining said at least one illumination map with said at least one frame with a second dynamic range.

11. The method according to claim 10, wherein obtaining selection parameters, or information representing said selection parameters, comprises reading values stored in at least one memory.

12. The method according to claim 10, wherein obtaining selection parameters, or information representing said selection parameters, comprises extracting values transmitted in said signal.

13. The method according to anyone of claims 10 to 12, wherein reconstructing (72) said at least one illumination map from said selection parameters and said at least one frame with a second dynamic range comprises:
- selecting, from said selection parameters:
- at least one of said information element having a rank equal to, or above, said threshold (T) and a value equal to, or above, said minimum value (V), to obtain at least one selected information element, and
- at least one least significant bit of said at least one selected information element, to obtain at least one selected least significant bit, the number of selected least significant bit being inferior than, or equal to, said number of bits (B),
- extracting the values carried by said at least one selected least significant bit to reconstruct said at least one illumination map.

14. **A signal** representing a sequence of frames with a first dynamic range,
comprising at least one frame with a second dynamic range carrying data representing at least a part of at least one illumination map, said first dynamic range being higher than said second dynamic range,
wherein said signal carries, for at least one block of said at least one frame with a second dynamic range, selection parameters for selecting at least one at least one bit of at least one information element obtained from at least one block of said at least one frame with a second dynamic range, or information representing said selection parameters and enabling their reconstruction by a decoder, said selection parameters comprising a threshold (T), a minimum value (V) and a number of bits (B).

15. **A computer program product** downloadable from a communication network and/or recorded on a medium readable by computer and/or executable by a processor comprising program code instructions to execute the steps of a method according to anyone of claims 1 to 13 when this program is executed on a computer.

16. **An encoder** for encoding a sequence of frames with a first dynamic range, comprising at least one processor configured to:
- obtain, for at least one frame with a first dynamic range of said sequence, at least one frame with a second dynamic range and at least one illumination map, said first dynamic range being higher than said second dynamic range,
- embed said at least one illumination map within said at least one frame with a second dynamic range, by:
- obtaining, for at least one block of said at least one frame with a second dynamic range, selection parameters for selecting at least one bit of at least one information element obtained from said at least one block, said selection parameters comprising a threshold (T), a minimum value (V) and a number of bits (B),
- selecting, from said selection parameters:
- at least one of said information element, to obtain at least one selected information element having a rank equal to, or above, said threshold (T) and a value equal to, or above, said minimum value (V), and
- at least one least significant bit of said at least one selected information element, to obtain at least one selected least significant bit, the number of selected least significant bit being inferior than, or equal to, said number of bits (B),
- modifying said at least one selected least significant bit, to carry data representing at least a part of said at least one illumination map.

17. **A decoder** for decoding a signal representing a sequence of frames with a first dynamic range, said signal comprising at least one frame with a second dynamic range carrying data representing at least a part of at least one illumination map, said first dynamic range being higher than said second dynamic range
said decoder comprising at least one processor configured to:
- obtain, for at least one block of said at least one frame with a second dynamic range, selection parameters for selecting at least one bit of at least one information element obtained from said at least one block of said at least one frame with a second dynamic range, or information representing said selection parameters and enabling their reconstruction, said selection parameters comprising a threshold (T), a minimum value (V) and a number of bits (B),
- reconstruct said at least one illumination map from said selection parameters and said at least one frame with a second dynamic range, and
- reconstruct at least one frame with a first dynamic range by combining said at least one illumination map with said at least one frame with a second dynamic range.
